# EUROPEAN PATENT APPLICATION

(11) **EP 1 209 513 A2**
(43) Date of publication of application: **29.05.2002**
(21) Application number: 01127337.2
(22) Date of filing: 20.11.2001
(51) Int. Cl.: G02F 1/1335

(54) **Liquid crystal display device and electronic apparatus provided with the same**

(30) Priority: 22.11.2000 JP 2000355948; 04.09.2001 JP 2001267913
(71) Applicant: SEIKO EPSON CORPORATION, Shinjuku-ku, Tokyo 163-0811 (JP)
(72) Inventor: Arikawa, Yasuo, Suwa-shi, Nagano-ken 392-8502 (JP)
(74) Representative: HOFFMANN - EITLE

(57) **Abstract**

A liquid crystal display device which can perform reverse display and has superior display quality is manufactured at a low cost.

A liquid crystal panel 100 has window portions 200a at positions corresponding to pixels P and P' and a light modulator 200 provided with a light modulation portion at a position corresponding to a non-display portion Q. An electric field is not applied to the pixel P forming a display pattern such as a numeral, and an electric field is applied to the pixel P' which does not form a display pattern, whereby a display mode of reverse display (negative pattern) can be realized.

## Description

### [Technical Field of the Invention]

The present invention relates to the structures of display devices for realizing predetermined viewing modes, and more specifically, relates to a liquid crystal display device and an electronic apparatus provided with the same.

### [Description of the Related Art]

In liquid crystal display devices for use in word processors, electronic calculators, and the like, display of a so-called positive pattern is generally performed. For example, the background is displayed in a bright color (a light color, such as white, light green, light gray, or silver), and a display pattern such as numerals or letters is displayed in a dark color (a deep color such as black). However, in a liquid crystal display device for use in products which must have a stylish appearance, for example, a watch, relatively many displays of negative patterns have been performed in which the background is displayed in a dark color, and a display pattern, such as numerals or letters, is displayed in a bright color.

When the display of positive pattern described above is performed, a so-called normally white liquid crystal panel has been generally used which has a pair of polarizers provided at both sides of a TN mode liquid crystal cell in a cross nicol relation (that is, the transmission axes of the polarizes are perpendicular to each other). In this normally white liquid crystal display device, when an electric field is not applied, the pixel exhibits a bright color since the light transmittance is high, and when an electric field is applied, the pixel exhibits a dark color since the light transmittance is decreased.

In contrast, in the case in which the display of negative pattern is performed, the normally white liquid crystal panel described above may also be used; however, when an area (segment portion) at which pixels are formed is limited to a part of the display area, for example, when digital display is performed on a watch, a normally black liquid crystal panel has been frequently used. The normally black liquid crystal panel described above is a reverse type liquid crystal panel which exhibits a dark color since the light transmittance is low when an electric field is not applied and exhibits a bright color since the light transmittance is increased when an electric field is applied.

### [Problems to be Solved by the Invention]

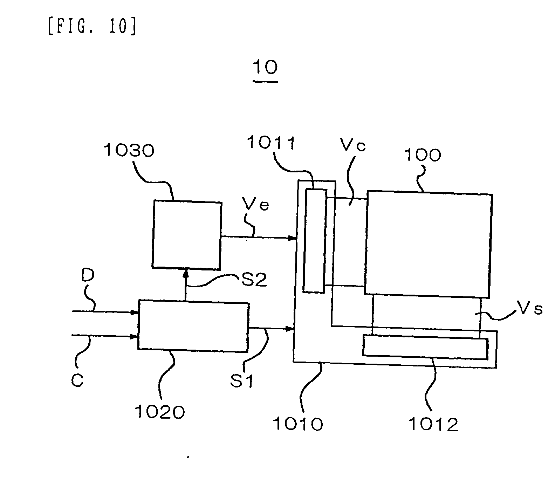

When the display of negative pattern described above is performed, since it is necessary to apply an electric field to pixels which form a display pattern, such as numerals or letters. However, as can be seen in the graph in Fig. 9 showing the relationship between the light transmittance and the applied voltage, when a sufficiently high voltage is not applied, the luminosity of the display pattern cannot be sufficiently increased due to the initial light transmittance with an applied voltage, the display contrast is decreased, and as a result, a problem of degradation of the display quality occurs.

In addition, the viewing angle property is also not so superior, and hence, a problem in that the visibility is degraded also occurs.

Accordingly, the present invention was made to solve the problems described above, and an object of the present invention is to provide a liquid crystal display device which is preferably used for displaying negative patterns, can be formed at a reduced cost, and has superior display quality.

### [Means for Solving the Problems]

A liquid crystal display device of the present invention for solving the problems described above comprises a liquid crystal panel having a pixel; and light modulation means comprising a first area provided with or without a predetermined light modulation property at a position approximately corresponding to the pixel and a second area provided with a light modulation property at a position other than that of the first area, wherein the light modulation property of the second area is different from that of the first area.

According to the present invention, when the light modulation means comprises the first area at the position approximately corresponding to the pixel and the second area at the position other than that of the first area, a predetermined viewing mode can be realized due to the property of the first area when the light transmittance of the pixel is increased, and when the light transmittance of the pixel is decreased, another display mode is realized. In addition, a display mode in accordance with the property of the second area is realized in the second area. Accordingly, when the properties of the first area and the second area of the light modulation means are properly set, display can be performed in accordance with the properties of the light modulation means. For example, even when a so-called normally white liquid crystal panel is used, the display of negative pattern can be performed by properly setting the optical property of the first area and the light modulation property of the second area.

In the light modulation means described above, the first area may have a predetermined light modulation property or may not perform light modulation at all. On the other hand, the second area is formed so as to perform at least some light modulation for light, and the light modulation mode of the second area is different from that of the first area. For example, since the first area may be formed so as to exhibit a bright display, and the second area may be formed so as to exhibit a dark display, display of a so-called negative pattern can be realized.

The light modulation function or the light modulation property of the light modulation means includes frequency modulation which can change the hue, amplitude modulation which can change the brightness, and phase modulation which can change the color quality. When the light modulation means is provided with at least one of the frequency modulation, amplitude modulation, and phase modulation described above, that is, when the light modulation means is provided with one of the modulation functions described above or at least two thereof appropriately combined with each other, various hues, brightness, color quality, or the like can be created.

In the present invention, the second area is preferably provided at a position corresponding to that at which the pixel is not provided. When the second area is provided at a background portion (portion except that the display pattern can be formed) at which the pixel is not provided, a display mode of a so-called background portion of an electronic calculator or a watch can be created by using the light modulation property of the second area.

In the present invention, the liquid crystal panel described above is preferably formed so that the first viewing mode or the second viewing mode, which are different from each other, is selectively performed in the pixel in accordance with an application state of a voltage by using light which is modulated or not modulated in the first area.

In the present invention, it is preferable that the first viewing mode be visually nearer to a third viewing mode which is obtained by using light modulated in the second area, and the second viewing mode be visually further from the third viewing mode. Since the first viewing mode realized in the pixel is visually nearer to the third viewing mode (for example, dark display) obtained by using the light modulated in the second area, when the first viewing mode is realized, the pixel may be placed in a non-display state (for example, dark display). In addition, since the second viewing mode is visually further from the third viewing mode compared to the first viewing mode, the pixel may be placed in a display state (for example, bright display). Accordingly, a display mode can be realized in which a pixel having the second viewing mode is used as a display pattern, and a pixel having the first viewing mode and a portion having the third viewing mode are used as the background portion. In addition, a reverse display can be formed when the display pattern is bright, and the background portion is dark.

The visual distance is the degree of difference in visibility defined by the difference in luminosity, hue (color coordinates), and the like, together with human engineering perception and knowledge. In general, the product of the difference in luminosity and the distance of a position on the hue circle defined by JIS is calculated by multiplying each parameter by an appropriate factor, whereby the visual distance can be defined.

In the present invention, the liquid crystal panel is preferably formed so that the second viewing mode is realized in the pixel when a voltage is not applied. Since the second viewing mode is realized when a voltage is not applied, and a display pattern is thereby formed, for example, when a digital time display is performed by using a plurality of pixels, the number of pixels to which an voltage is applied can be reduced, and hence, the electrical power consumption can be reduced.

In the present invention, the second viewing mode preferably has high luminosity compared to that of the first viewing mode. In the case described above, since the second viewing mode is bright, and the first viewing mode is dark, when the pixel is the display pattern portion, and the portion corresponding to the second area is the background, a reverse display (display of negative patterns) can be created. In the case described above, when the pixel is formed so as to exhibit the second viewing mode when a voltage is not applied, a liquid crystal panel can be used which is formed of a panel structure (a so-called normally white type) having a high light transmittance when a voltage is not applied. Hence, the liquid crystal panel can be easily obtained at a low cost, and the production cost can be reduced. In addition, the display quality can be improved, for example, the luminosity of a bright portion can be increased without increasing a driving voltage, the display contrast can be improved, and a superior viewing angle property can also be obtained.

In the present invention, the second viewing mode preferably includes a plurality of viewing modes different from each other formed in a plurality of said pixels, or the second viewing mode preferably includes a plurality of viewing modes different from each other formed in the pixel. When the second viewing mode includes a plurality of view modes different from each other in the plurality of pixels, a display composed of different viewing modes between the pixels can be performed. For example, a display formed of pixels having hues different from each other can be performed, and hence, a two-color display can be created. In addition, when the plurality of second viewing modes which are different from each other is formed in one pixel, various design mode can be realized in one pixel. For example, when viewing modes having different hues are formed in one pixel, a two-color display can be created. The viewing modes different from each other are not limited to hues, and viewing modes having different luminosity or color quality may also be used.

In the present invention, the liquid crystal panel described above may comprise a liquid crystal cell which exhibits a retardation property depending on an applied electric field; first polarization means provided at the front side of the liquid crystal cell; and second polarization means provided at the rear side of the liquid crystal cell. In the case described above, by controlling an application state of an electric field in the pixel, when the liquid crystal cell has a certain retardation value, the liquid crystal panel can be placed in a state in which a polarization component passing through the second polarization means may pass the first polarization means while maintaining its polarized state via the liquid crystal cell, that is, the liquid crystal panel can be placed in a transmission state. On the other hand, when the liquid crystal cell has another retardation value, the liquid crystal panel can be placed in a state in which a polarization component passing through the second polarization means and the liquid crystal cell is blocked by the first polarization means, that is, the liquid crystal panel can be placed in a light blocking state.

As a liquid crystal panel to which the present invention can be applied, a known reflective liquid crystal panel provided with one piece polarizer may be used which comprises polarization means and a retardation film at the front side of the liquid crystal cell, and a reflective layer at the rear side of the liquid crystal cell. In addition, a liquid crystal panel using polymer dispersed liquid crystal or guest-host liquid crystal (including a mode in combination thereof) without using a polarizer, or a liquid crystal panel using a dynamic scattering mode may also be used.

In the present invention, the light modulation means is preferably disposed between the liquid crystal cell and the second polarization means or is preferably disposed at the rear side of the second polarization means and adjacent thereto. In the case in which a liquid crystal panel comprises two polarizers, as described above, the light modulation means may be disposed at the front side or at the rear side of the second polarization means and adjacent thereto, whereby the difference between the depth (depth at which a predetermined viewing mode can be optically viewed) of the viewing mode which is viewed due to optical properties of the liquid crystal in the pixel and the depth of the viewing mode obtained by using the light modulated in the second area of the light modulation means can be reduced, and a strange visual sensation can be suppressed. The reason for this is that since a viewing mode obtained due to the optical properties of the liquid crystal in the pixel, for example, a dark viewing mode, is optically viewed as if it is disposed at a position of the second polarization means which is provided at the rear side of the liquid crystal cell, the apparent depth of this viewing mode can be made to be approximately equivalent to the physical depth of the light modulation means.

In the present invention, the light modulation means is preferably disposed at the front side of the first polarization means or is preferably disposed between the first polarization means and the liquid crystal cell. In the case described above, the liquid crystal cell is disposed at the rear side of the light modulation means, and hence, it is not necessary for a part of the liquid crystal cell to exist at a portion (portion other than a pixel) corresponding to the second area of the light modulation means. Accordingly, when a plurality of pixels is formed, a plurality of liquid crystal cells can be disposed at the rear side of the light modulation means, and hence, a plurality of pixels can be formed by using the plurality of liquid crystal cells.

In the present invention, it is preferable that at least one of the first polarization means and the second polarization means selectively modulate a polarization component having a transmission plane in a predetermined direction to form a predetermined polarized spectral distribution of the polarization component so that a color tone obtained by this polarized spectral distribution and a modulated spectral distribution formed by light modulation or non-modulation in the first area is approximately equivalent to a color tone obtained by modulating light in the second area.

As the polarization means, polarization means is generally used which selectively absorbs (or reflects) a polarization component having a transmission plane in a predetermined direction, and substantially remove the polarization component in, for example, the visible light range. In addition to the polarization means described above, there is polarization means which modulates a polarization component so as to form a predetermined polarized spectral distribution thereof, and as an example thereof, there may be mentioned a so-called color polarizer which primarily transmits light in a specific wavelength region (for example, red color region). When this polarized spectral distribution is formed so as to have a color tone approximately equivalent to that of the spectral distribution obtained by modulating light in the second area, and the retardation property of the liquid crystal cell is appropriately controlled by an applied voltage, a viewing mode approximately equivalent to the viewing mode in the second area, for example, the first viewing mode described above, can be realized in the pixel.

In the case described above, by controlling an application state of an electric field in a pixel, when the liquid crystal cell has a certain retardation value, the liquid crystal panel can be placed in a state in which a polarization component passing through the second polarization means may pass through the first polarization means while maintaining its polarized state via the liquid crystal cell, that is, the liquid crystal panel can be placed in a light transmission state. In addition, when the liquid crystal cell has another retardation value, the liquid crystal panel can be placed in a state in which a polarization component passing through the second polarization means and the liquid crystal cell is blocked in the first polarization means, that is, the liquid crystal panel can be placed in a light blocking state. Accordingly, when the liquid crystal panel is in a light transmission state, a certain viewing mode determined by the property of the first area of the light modulation means, for example, the second viewing mode, can be obtained in the pixel. On the other hand, when the liquid crystal panel is in a light blocking state, another viewing mode determined by both the property of the light modulation means and the polarized spectral distribution described above, for example, the first viewing mode, can be obtained in the pixel.

The latter viewing mode is generally determined by subtractive mixing of the polarized spectral distribution and a spectral distribution formed in the first area. For example, when the first area does not substantially perform light modulation (that is, transparent and colorless), the viewing mode is determined by the polarized spectral distribution. When this polarized spectral distribution has generally low intensity in the visible light range, the viewing mode is a dark color (for example, a black color), and when this polarized spectral distribution localizes in the red color region in the visible light range, the viewing mode is a red color. In addition, when the first area is formed so as to perform predetermined light modulation, a viewing mode can be obtained in accordance with the spectral distribution formed of the product (synthesis or subtractive mixing) of the polarized spectral distribution of the polarization component modulated by polarization means and a modulated spectral distribution showing the mode of light modulation in the first area. For example, when the first area forms a yellowish color (that is, light having a spectral distribution having an effective light component in the red color region and the green color region), and when the polarized spectral distribution formed by modulation using the polarization means described above localizes in the red color region and the blue color region (magenta) in the visible light range, the viewing mode is a red color by subtractive mixing of both light.

In addition, in a more particular liquid crystal display device of the present invention, the liquid crystal panel comprises a liquid crystal cell, first polarization means provided at the front side of the liquid crystal cell, and second polarization means provided at the rear side of the liquid crystal cell, and at least one of the first polarization means and the second polarization means selectively modulates a polarization component having a transmission plane in a predetermined direction to form a predetermined spectral distribution of the polarization component so as to realize the first viewing mode by the polarized spectral distribution and a modulated spectral distribution formed by modulation or non-modulation in the first area.

In the present invention, it is preferable that the first viewing mode be realized in the pixel by the product of the polarized spectral distribution obtained by modulating the polarization component using at least one of the first polarization means and the second polarization means and a modulated spectral distribution obtained by light modulation or non-modulation in the first area, and that the product of the spectral distribution described above be formed so as to be approximately equivalent to the viewing mode obtained by light modulation in the second area.

In the present invention, the second viewing mode is preferably formed in the pixel by light modulation or non-modulation in the first area without being modulated by at least one of the first polarization means and the second polarization means which are able to form the polarized spectral distribution.

In the present invention, it is preferable that a plurality of said liquid crystal panels each having the pixel be provided and that the light modulation means be provided at the front side of the plurality of said liquid crystal panels. In the case described above, since the plurality of said liquid crystal panels is provided at the rear side of the light modulation means, a large liquid crystal display device can be easily formed without forming a large liquid crystal panel. In addition, in the case described above, each liquid crystal panel may form one pixel or may form a plurality of pixels.

In addition, an electronic apparatus of the present invention is provided with the liquid crystal display device according to the present invention described above. As the electronic apparatuses, there may be mentioned various electronic apparatuses provided with liquid crystal display devices at the display portions thereof, such as various imaging apparatuses, an electronic display board, an information processing apparatus, a printing apparatus, and a mobile phone. In particular, the display surface of the liquid crystal display device of the present invention is effectively used as a time information display portion. The time information includes current time, alarm time, world time, elapsed time, remaining time (timer), and the like.

In particular, digital time information display is effectively performed by a dot matrix or a segment type liquid crystal display device, and in addition, pattern display (display of an icon representing a specific content or a specific character) can be very effectively performed together with or without the time information display. Furthermore, when the pattern display described above is performed, a representative portion such as an icon or a character may be formed of a plurality of pixels so as to move with time (performing animation movement or the like).

### [Advantages]

As has thus been described, according to the present invention, a liquid crystal display device which can perform reverse display (negative pattern) can be formed, the production cost thereof can be reduced, and the display quality thereof can be improved.

### [Brief Description of the Drawings]

### [Fig. 1]

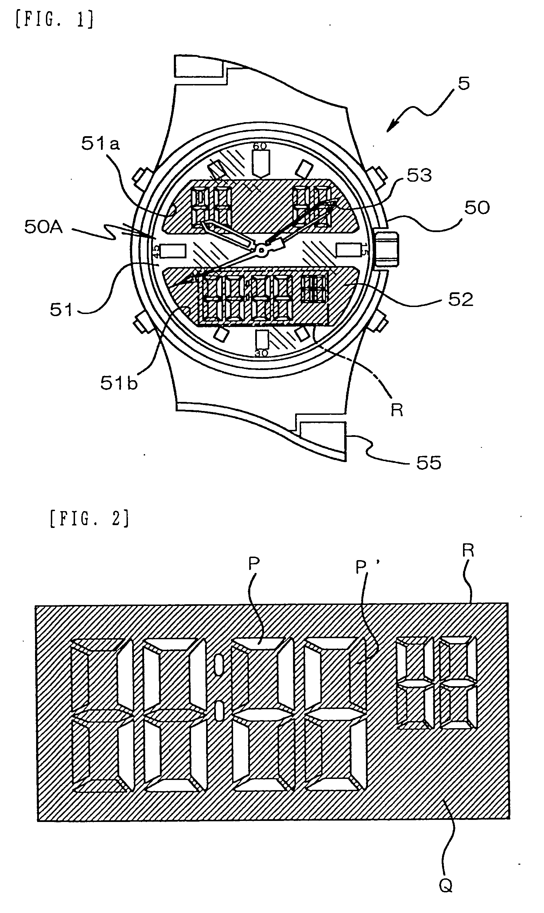

Fig. 1 is a schematic plan view for showing a time information display portion of a watch as an example of an electronic apparatus having a liquid crystal display device therein according to the present invention.

### [Fig. 2]

Fig. 2 is a partly enlarged plan view for showing a display area R in Fig. 1.

### [Fig. 3]

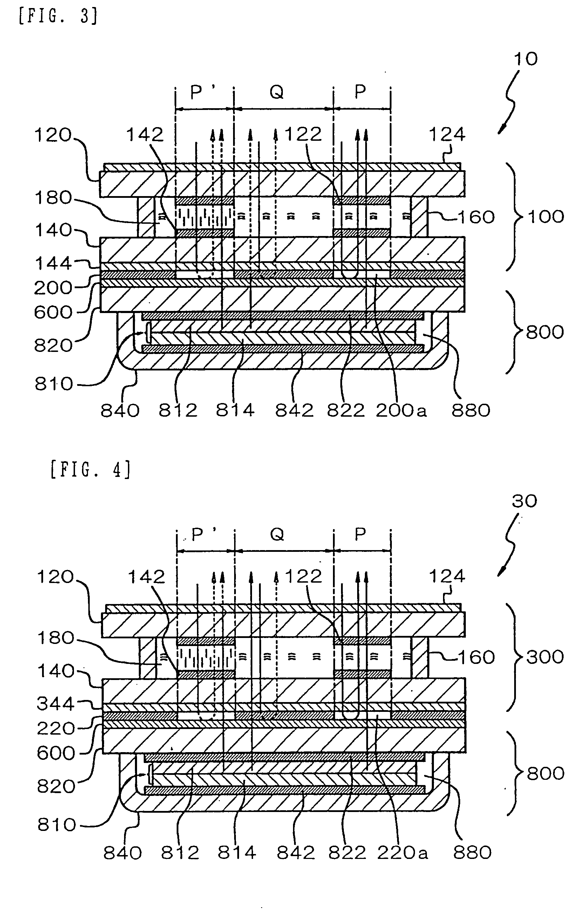

Fig. 3 is a vertical cross-sectional view for schematically showing the structure of a first embodiment according to the present invention.

### [Fig. 4]

Fig. 4 is a vertical cross-sectional view for schematically showing the structure of a second embodiment according to the present invention.

### [Fig. 5]

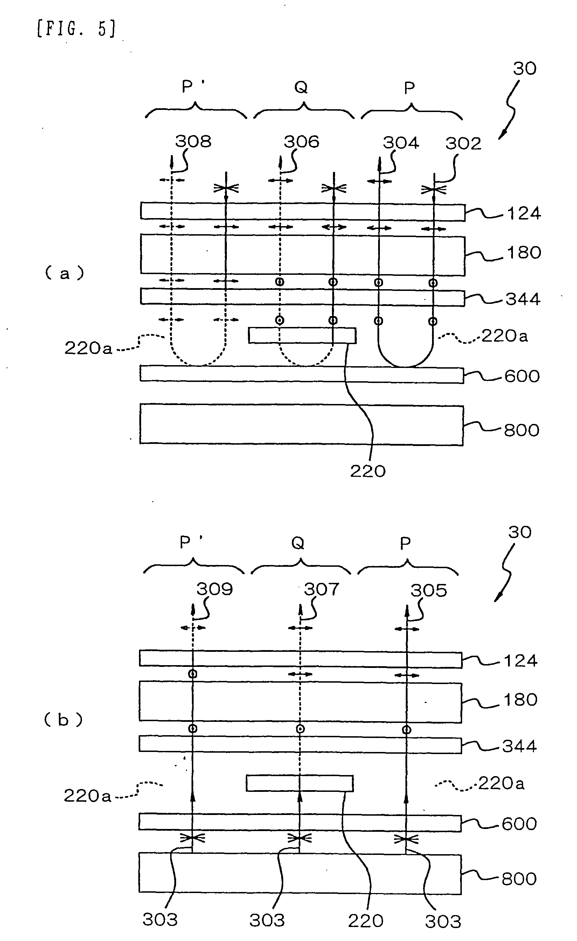

Fig. 5 includes views (a) and (b) for illustrating optical behaviors in the second embodiment.

### [Fig. 6]

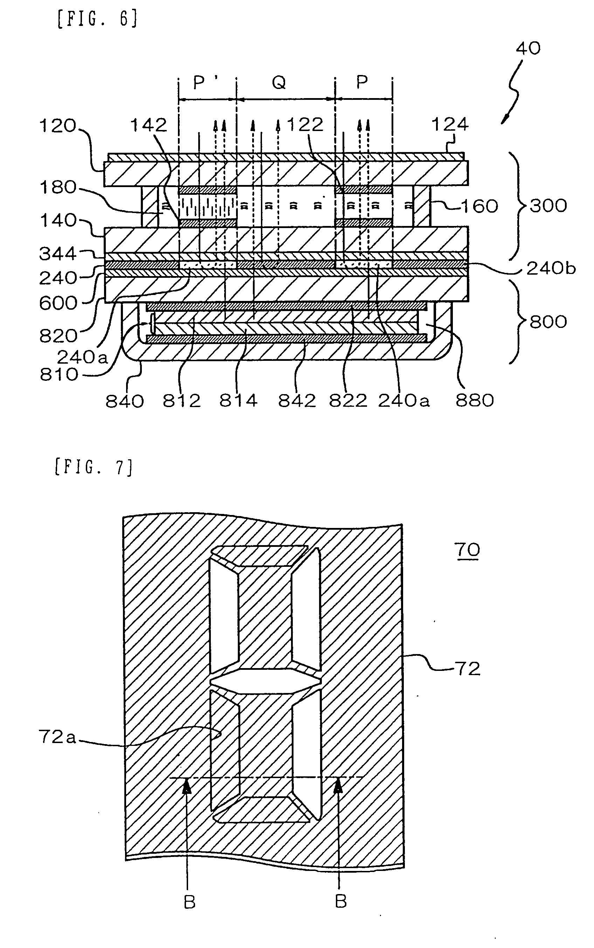

Fig. 6 is a vertical cross-sectional view for schematically showing the structure of a third embodiment according to the present invention.

### [Fig. 7]

Fig. 7 is a partly vertical cross-sectional view for schematically showing the structure of a fourth embodiment according to the present invention.

### [Fig. 8]

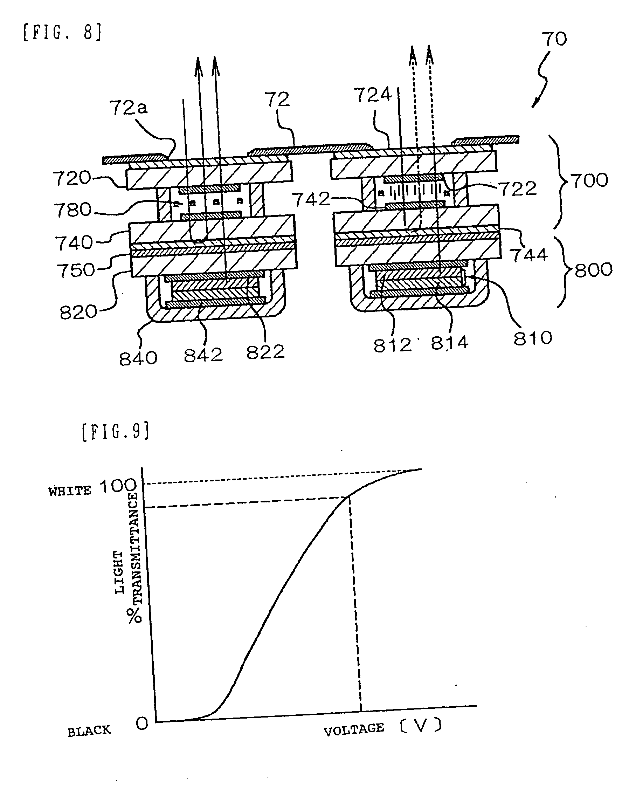

Fig. 8 is a partly cross-sectional view for schematically showing the state taken along the line B-B in Fig. 7.

### [Fig. 9]

Fig. 9 is a graph for showing the relationship between the light transmittance and the applied voltage of a TN mode liquid crystal display device.

### [Fig. 10]

Fig. 10 is block diagram for showing a schematic circuit configuration of a liquid crystal display device which can be used in each embodiment.

### [Description of the Embodiments]

Hereinafter, embodiments of a liquid crystal display device and an electronic apparatus according to the present invention will be described in detail with reference to the accompanying figures.

First, referring to Figs. 1 and 2, an example of the structure of an electronic apparatus will be described which is provided with a liquid crystal display device according to an embodiment of the present invention. Fig. 1 is a schematic plan view showing a major portion of a watch provided with a liquid crystal display device of the present invention. Fig. 2 is a schematic plan view showing an enlarged display area R in Fig. 1.

As shown in Fig. 1, this watch 5 comprises a watch body 50 and a strap 55 connected to this watch body 50. A time information display portion 50A covered by a transparent glass is formed at the front side of this watch body 50. The time information display portion 50A is composed of a analog display area 51 having two display apertures 51a and 51b; a liquid crystal display device 52 which is provided at the rear side of this analog display area 51 and has a portion formed so as to be viewed through the display apertures 51a and 51b; and a hand portion 53 composed of an hour hand, a minute hand, or the like, which penetrate the central portion of the analog display area 51 and the central portion of a liquid crystal panel of the liquid crystal display device 52 and which are connected to a movement not shown in the figure. On the time information display portion 50A, the time information, such as current time, a timer, elapsed time, alarm time, or world time, is displayed in accordance with user's selection. In addition, in accordance with designing, the analog display area 51 or the hand portion 53 may be or may not be provided. The liquid crystal display device 52 is not limited to a monolayer structure and may have a multilayer structure composed of at least two layers. Furthermore, the cross-section of the liquid crystal display device 52 is not limited to a flat shape, and the cross-section thereof may have a curved shape.

The display area R is provided on the liquid crystal display device so as to be viewed through the display aperture 51b of the analog display area 51. As shown in Fig. 2, this display area R is composed of a plurality of pixels P and P' and a non-display portion Q (background portion) formed on the display area R except for areas of these pixels. The pixels P and P' each has a strip shape extending in a predetermined direction, and in the example shown in the figure, the pixels form a general seven-segment structure in which a portion for displaying each numeral has seven pixels arranged in the figure of 8. The arrangement of the pixels is not limited to the seven-segment arrangement, and it may have a dot matrix display arrangement.

Among the plurality of pixels in the display area R of this embodiment, a color tone of the pixel P which constitutes a displayed numeral and a color tone of the pixel P' which does not constitute the numeral are different from each other. In addition, the color tone of the pixel P' and a color tone of the non-display portion Q are approximately equivalent to each other, and in contrast, the color tone of the pixel P is more different from the color tone of the non-display portion Q compared to the color tone of the pixel P', that is, the difference in color tone of the pixel P from that of the non-display portion Q can be more easily recognized. In more particular, the color tone of the pixel P is a bright color (for example, a white color or another light color), and the color tones of the pixel P' and the non-display portion Q are both dark colors (for example, a black color or another deep color), so that a display mode which ensures the visibility by the luminosity may be formed. In the case described above, a display mode of a so-called negative pattern is formed. In addition, a display mode which ensures the visibility by the hue may be formed in which, for example, the color tone of the pixel P is blue, and the color tones of both the pixel P' and the non-display portion Q are red. In the case described above, a display mode of a two-color (multicolor) pattern is formed.

In the display area R, each of the plurality of pixels P and P' is formed so that the viewing mode thereof selectively has one of the color tone of the pixel P and the color tone of the pixel P' shown in the figure. The structure in that the viewing mode can be selectively changed will be described in detail in the embodiments described below.

### [First Embodiment]

Next, referring to Fig. 3, a liquid crystal display device according to a first embodiment of the present invention will be described. Fig. 3 is a schematic cross-sectional view showing the liquid crystal display device according to the first embodiment of the present invention. A liquid crystal display device 10 consists of a liquid crystal panel 100 composed of a pair of substrates 120 and 140 formed of a glass or the like and a liquid crystal layer 180 provided therebetween; a light modulation layer 200 provided at the rear side of the liquid crystal panel 100; a reflective layer 600 provided at the rear side of the light modulation layer 200; and a backlight 800 provided at the rear side of the reflective layer 600.

In the liquid crystal panel 100, the substrates 120 and 140 are bonded together by a sealing material 160 so as to form a space therebetween, and the liquid crystal layer 180 is formed by enclosing liquid crystal inside the sealing material 160. Transparent electrodes 122 and 142 formed by deposition or sputtering of ITO (Indium Tin Oxide) or the like are provided on the inside surfaces of the substrates 120 and 140, respectively. Areas at which the transparent electrodes 122 and the transparent electrodes 142 overlap each other in plan view are the pixels P and P' described above. Polarizers 124 and 144 are adhered to the outside surfaces of the substrates 120 and 140, respectively.

The liquid crystal panel 100 is formed so as to transmit light therethrough when a voltage is not applied and is formed so as not to transmit light therethrough when a voltage is applied by the transparent electrodes 122 and 142. As the liquid crystal display device 100, for example, a TN (twisted nematic) type liquid crystal display device may be mentioned. In the case described above, the liquid crystal layer 180 has a twist angle of 90°, i.e., an optical activity of 90°, in the initial orientation state, and when a predetermined voltage or more is applied, since the liquid crystal molecules are oriented in the electric field direction, that is, in the direction of the panel thickness, the liquid crystal layer has substantially isotropic optical properties. In the case described above, the polarizer 124 and the polarizer 144 are disposed so that the polarization axes thereof are perpendicular to each other. Hereinafter, based on the assumption that the liquid crystal panel is a TN type liquid crystal panel, the case will be described in which the polarizer 124 is formed to have a polarization axis in parallel with the plane of the figure and an absorption axis perpendicular thereto, that is, the polarizer 124 is formed to transmit a polarization component having a transmission plane in parallel with the plane of the figure and to absorb a polarization component having a transmission plane perpendicular thereto, and in which the polarizer 144 is disposed so that the polarization axis and the absorption axis thereof are perpendicular to the polarization axis and the absorption axis of the polarizer 124, respectively.

The present invention is not limited to liquid crystal panels using a TN (twisted nematic) mode. The present invention may be applied to a liquid crystal panel having a combination of a liquid crystal layer provided with a controllable retardation property and polarization means, such as an STN (super twisted nematic) mode, or may be applied to another liquid crystal panel using a polymer dispersed type, a guest-host type, a dynamic scattering mode, or the like.

The light modulator 200 is disposed at the rear side of the liquid crystal panel 100, that is, is disposed on the outside surface of the polarizer 144. Window portions 200a are provided in the light modulator 200 at positions corresponding to the first areas described above, and areas other than the window portions 200a correspond to the second areas described above. The window portions 200a are formed into a flat shape so as to approximately overlap the pixels P and P' in plan view. It is preferable that the window portion 200a be formed so as to be slightly smaller than each area of the pixel P and P', and the inside peripheries of the light modulator 200, which correspond to the window portions 200a, be disposed slightly inside the peripheries of the pixels P and P' when viewed in plan view. According to the structure thus formed, it can be difficult to view the inside periphery of the window portion 200a, that is, the boundary of the first area and the second area, from the outside when the pixel P' is in a light blocking state.

In general, a light modulator functions to modulate light, and more particularly, is formed so as to change the spectral distribution of light, which is emitted from the liquid crystal panel, in the visible light range. Due to this change in the spectral distribution, the viewing mode of the display area of the liquid crystal panel is provided with a predetermined color tone, that is, is provided with predetermined luminosity and hue. In addition, both a light modulator which functions to change the spectral distribution by transmitting light therethrough or a light modulator which functions to change the spectral distribution by reflecting light may be used.

The light modulator 200 of this embodiment essentially influences the spectral distribution of light that passes therethrough, and for example, the light modulator 200 may be formed of a filter containing a color agent, such as a dye or a pigment, having a specific hue. In addition, in this embodiment, the window portion 200a of the light modulator 200 is formed so as to transmit light therethrough while the spectral distribution thereof is maintained. The light modulator 200 may be a laminate formed by laminating a modulation layer having a predetermined hue by deposition or sputtering on a transparent substrate composed of a transparent resin film or the like having openings corresponding to the window portions 200a. Alternatively, the light modulation film 200 may be formed by punching or cutting the window portions 200a of a plate which is composed of a resin or the like mixed with a color agent such as a pigment or a dye, and which has a specific hue.

The reflector 600 is disposed at the rear side of the light modulator 200 described above. The reflector 600 of this embodiment is a transflective layer having both the reflection property and the transmission property. The reflector layer 600 is formed of, for example, a thin-film metal of Al, Cr, or the like having a sufficient thickness so as to have a transflective property. The reflector 600 may be formed directly on the surface of the light modulator 200 or may be formed on a substrate composed of a transparent film or the like by deposition, sputtering, or the like.

The backlight 800 may be any type of light source, such as a plane light source composed of a light-emitting element and a light guide plate, as long as it can illuminate the liquid crystal panel 100 from the rear side thereof, and in this embodiment, an organic luminescent panel, which is one type of plane light source, is used. The backlight 800 has a known structure formed by sealing a light-emitting layer 810 using a substrate 820 composed of a glass or the like and the sealing glass provided at the rear side thereof. A transparent electrode 822 formed by deposition or sputtering of ITO is provided on the rear side surface of the substrate 820. An electron transport layer 812 is formed on the transparent electrode by deposition or sputtering, and a hole transport layer 814 is further formed on the electro transport layer by deposition or electrolytic polymerization. These electron transport layer 812 and hole transport layer 814 form the light-emitting layer 810 described above. A metal electrode 842 formed of a co-deposition film composed of magnesium and silver is formed by deposition, sputtering, or the like on the surface of the light-emitting layer 810. The space around the light-emitting layer 810 is filled with silicone oil 880, and the entire light-emitting layer is sealed by the sealing glass 840.

In the liquid crystal display device 10 of this embodiment thus described, a display mode can be viewed since incident external light is reflected on the reflective layer 600, and in addition, a display mode can also be viewed by transmitting part of the luminous light emitted from the backlight 800 through the reflective layer 600, whereby a transflective liquid crystal display device is formed.

In the pixel P according to this embodiment to which a voltage is not applied, incident external light passes through the liquid crystal panel 100 in a light transmission state and the window portion 200a of the light modulator 200, is reflected on the reflective layer 600, passes again through the window portion 200a, and is emitted to the outside after passing through the liquid crystal panel 100. In addition, part of the luminous light emitted from the backlight 800 passes through the reflective layer 600 and the window portion 200a and is then emitted after passing through the liquid crystal panel 100. Accordingly, the pixel P exhibits a bright viewing mode (white color).

In addition, external light incident on the pixel P' to which a voltage is applied cannot pass through a liquid crystal panel 100 which is in a light blocking state. In addition, part of luminous light emitted from the backlight 800 enters the liquid crystal panel 100 after passing through the reflective layer 600 and the window portion 200a, but cannot pass through the liquid crystal panel 100. As a result, the pixel P' exhibits a dark viewing mode (black color).

Furthermore, when external light enters the non-display portion Q, it passes through the liquid crystal panel 100, reaches the light modulation layer 200, and is then modulated by the light modulation layer 200. After the light is reflected when it is modulated, or after the light passing through the light modulation layer 200 is reflected on the reflective layer 600 and again passes through the light modulation layer 200, the light passes through the liquid crystal panel 100 and is then emitted. In addition, part of the luminous light emitted from the backlight 800 passes through the reflective layer 600, is modulated by the light modulation layer 200, and is then emitted after passing through the liquid crystal panel 100. Accordingly, the non-display portion Q exhibits a viewing mode determined by the light modulated in the light modulation layer 200, for example, a viewing mode in accordance with the color tone of the light modulation layer 200.

In this embodiment, when the light modulation layer 200 is formed of a black filter or a black layer, a dark color (black color) is always viewed in the non-display portion Q, a bright color (white color) is viewed in the pixel P, and a dark color (black color) is viewed in the pixel P'. Accordingly, a display mode of a reverse display (negative pattern display) is realized in the display area R.

In the case in which a general display (positive pattern) is created by a general normally white liquid crystal panel, pixels in an application state of an electric field form a display pattern (numerals, letters, or figures), and the case of this embodiment in which a reverse pattern (negative pattern) is created is opposite to the case described above. That is, pixels P in a non-application state of an electric field form a display pattern having a bright viewing mode, and by applying an electric field to pixels P' which are unnecessary to form the display pattern, the pixels P' have a dark viewing mode equivalent to that of the non-display portion Q used as a background. Accordingly, the pixels P and P' perform reverse display by a liquid crystal driving circuit which is not shown in the figure. For example, when numeral "2" is displayed by a seven-segment pixel group, five pixels P are placed in a non-application state of an electric field, and an electric field is applied to the remaining two pixels P'.

In this liquid crystal display device 10, since a specific viewing mode can be obtained by light modulation using the light modulator 200 in the non-display portion Q which is formed on the display area R except for the areas of the pixels P and P', a reverse display (negative pattern) can be created even when a normally white liquid crystal panel 100 is used.

In addition, even when reverse display is performed, since the normally white liquid crystal panel 100 is used which is in a light transmission state when an electric field is not applied, a bright viewing mode of the pixel P can be realized at the initial orientation stage of liquid crystal, whereby without being influenced by an applied voltage, high luminosity can be obtained in the pixel P, a relatively wide viewing angle can be ensured, and the display quality can be improved.

Furthermore, since a reverse display having superior display quality can be created by the TN mode liquid crystal panel 100 as described above, it is not necessary to use an STN mode liquid crystal panel, whereby the production cost can be reduced, and difficulties in procurement of liquid crystal panels can also be avoided.

As described above, since it is not necessary to apply an electric field to the non-display portion Q in this embodiment, compared to the case in which a reverse display is realized by controlling the entire display area R of a general normally white liquid crystal panel which has pixels in the entire display area R, only the pixels P and P' may be reversely driven, whereby electrical power consumption can be significantly reduced. In addition, by reversely driving only the pixels P and P', the electrical power consumption can be further reduced compared to the case in which a positive pattern is displayed. The reason for this is that since an electrical field may only be applied to non-display pixels P' when a negative pattern is displayed in this embodiment, the number of pixels to which an electric field must be applied is smaller that that when a positive pattern is displayed. For example, when numeral "0" is displayed by using a seven-segment pixel group, the number of pixels to which an electric field is applied in a conventional panel is six, but the number of pixels to which an electric field is applied in this embodiment is one. In addition, in this embodiment, when numeral "1" is displayed, the number of pixels to which an electric field is applied is five, and as is in the case described above, the number of pixels is two when numeral "2" is displayed, whereby the number of pixels to which an electric field is applied can be reduced to one-half or less as a whole. Accordingly, the electrical power consumption can be significantly reduced compared to that of a conventional display of a positive pattern.

In this embodiment, the light modulator 200 is disposed between the polarizer 144 and the reflective layer 600; however, the position at which the light modulator 200 is disposed is not limited thereto and may be disposed at any position as long as the light modulator 200 is disposed at the upper side of the reflective layer 600. However, when the dark viewing mode of the pixel P' in this embodiment is viewed from the outside, it seems to be located at a position equivalent to the depth of the rear side portion of the liquid crystal panel 100, that is, at a position equivalent to the depth at which the polarizer 144 is disposed. Accordingly, in order to make the depth of the light modulator 200 which realizes the dark viewing mode in the non-display portion Q equal to the position at which a dark viewing mode of the pixel P' is apparently viewed so as to improve the visibility, the light modulator 200 is most preferably disposed at the rear side of the liquid crystal panel 100, that is, between the polarizer 144 and the reflective layer 600, or between the substrate 140 and the polarizer 144.

### [Second Embodiment]

Next, referring to Fig. 4, a liquid crystal display device according to a second embodiment of the present invention will be described. Fig. 4 is a cross-sectional view schematically showing the liquid crystal display device according to the second embodiment. The same reference labels in the first embodiment designate the same elements in this embodiment, and the descriptions thereof are omitted. A liquid crystal display device 30 is composed of a liquid crystal panel 300; a light modulation layer 220 provided at the rear side of the liquid crystal panel 300; and a reflective layer 600 and a backlight 800, which have the same structures as those described in the first embodiment.

The liquid crystal panel 300 has a substrates 120 and 140, a sealing material 160, and a liquid crystal layer 180, which are equivalent to those in the first embodiment. A polarizer 124 equivalent to that in the first embodiment is adhered to the outside surface of the substrate 120. A color polarizer 344 is adhered to the outside surface of the substrate 140. This color polarizer 344 has a polarization axis and an absorption axis equivalent to those of the polarizer 144 in the first embodiment. However, the color polarizer 344 is formed so as not to uniformly absorb polarization components, having a transmission plane in parallel with the absorption axis, in the entire visible wavelength region, but is formed so as to transmit light in a specific wavelength region, that is, is formed so as to form a predetermined polarized spectral distribution of the polarization component described above. The specific wavelength region described above may be any region in the visible light range and may include a plurality of wavelength regions. In this embodiment described below, the case in which the specific wavelength region is the red color region (region at the end portion of the long wavelength side in the visible light range) will be described by way of example.

The light modulator 220 of this embodiment is provided with window portions 220a at positions corresponding to pixels P and P' as in the first embodiment and is formed so as to serve as a red filter for forming light approximately equivalent to the spectral distribution having a specific wavelength region, which is formed by the color polarizer 344.

Next, referring to Fig. 5 which includes 5(a) and 5(b), a display mode of the liquid crystal display device 30 of this embodiment will be described. Fig. 5(a) is a schematic view for illustrating an optical structure of the liquid crystal display device 30 for performing display using incident external light.

In the pixel P to which an electric field is not applied, external light 302 passes through the polarizer 124 and becomes a linearly-polarized light having a transmission plane in parallel with the plane of the figure. Subsequently, the polarization direction of the polarized light is twisted by 90° by the liquid crystal layer 180 so as to be linearly-polarized light having a transmission plane perpendicular to the plane of the figure, passes through the color polarizer 344 while maintaining its polarized state, and is reflected on the reflective layer 600 after passing through the window portion 220a. This reflected linearly-polarized light perpendicular to the plane of the figure is again twisted by 90° by the liquid crystal layer 180 after passing through the color polarizer 344 so as to be linearly-polarized light having a transmission plane in parallel with the plane of the figure, and the polarized light mentioned above is emitted from the polarizer 124 as linearly-polarized light 304 having a transmission plane in parallel with the plane of the figure. As described above, since the liquid crystal panel 300 is in a light transmission state in the pixel P, the emitted light 304 is white light, and the pixel P exhibits a bright (white) viewing mode.

On the other hand, in the pixel P' to which an electric field is applied, when linearly-polarized light, which is formed by transmitting external light through the polarizer 124 so as to have a transmission plane in parallel with the plane of the figure, passes through the liquid crystal layer 180 without changing the polarization direction thereof and then enters the color polarizer 344. Since the color polarizer 344 has an absorption axis in parallel with the transmission plane of this linearly-polarized light, the red light among the linearly-polarized light passes therethrough, and the other color light is absorbed. Subsequently, the red linearly-polarized light passes through the window portion 220a, is then reflected on the reflective layer 600, again passes through the color polarizer 344, the liquid crystal layer 180, and the polarizer 124, and is then emitted from the polarizer 124 as red linearly-polarized light 308 having a transmission plane in parallel with the plane of the figure. Accordingly, the pixel P' exhibits a red viewing mode.

Furthermore, in the non-display portion Q, linearly-polarized light having a transmission plane in parallel with the plane of the figure is formed when the external light 302 passes through the polarizer 124. Subsequently, when this linearly-polarized light passes through the liquid crystal layer 180, the polarization axis of the linearly-polarized light is twisted by 90° so as to form linearly-polarized light having a transmission plane perpendicular to the plane of the figure, and the linearly-polarized light thus formed reaches the light modulator 220 after passing through the color polarizer 344. Red linearly-polarized light is formed when the linearly-polarized light described above passes through the light modulator 220, is then reflected on the reflective layer 600, and again passes through the light modulator 220 and the color polarizer 344 in this order. Subsequently, the polarization direction of the red linearly-polarized light is twisted by 90° by the liquid crystal layer 180 so as to form linearly-polarized light having a transmission plane in parallel with the plane of the figure, and this linearly-polarized light is emitted from the polarizer 124 as red linearly-polarized light 306 having a transmission plane in parallel with the plane of the figure. Accordingly, the non-display portion exhibits a red viewing mode.

Next, referring to Fig. 5(b), a display mode created by luminous light emitted from the backlight 800 of the liquid crystal display device 30 according to this embodiment will be described.

In the pixel P, after part of light 303 emitted from the backlight 800 passes through the reflective layer 600 and the window portion 220a, it passes through the color polarizer 344. In the step described above, a polarization component, which has a transmission plane perpendicular to the plane of the figure, of the light 303 passes through the color polarizer 344 while maintaining its polarized state; however, among polarization components having a transmissive plane in parallel with the plane of the figure, light in the red color region passes through the color polarizer 344, and light having the other color is absorbed therein. Accordingly, light in a region other than the red color region is formed into light having a transmission plane perpendicular to the figure. Subsequently, since the polarization direction is twisted by 90° by the liquid crystal layer 180, the light in the region other than the red color region is formed into linearly-polarized light having a transmission plane in parallel with the plane of the figure, and this linearly-polarized light passes through the polarizer 124 while maintaining the polarized state thereof. In addition, concerning the light in the red color region, only linearly-polarized light having a transmission plane in parallel with the plane of the figure passes through the polarizer 124. As described above, linearly-polarized light 305 having a transmission plane in parallel with the plane of the figure is emitted from the polarizer 124. Accordingly, the pixel P exhibits a bright (white) viewing mode.

On the other hand, in the pixel P', after part of light 303 emitted from the backlight 800 passes through the reflective layer 600 and the window portion 220a, it passes through the color polarizer 344. In the step described above, light in the red color region passes through the color polarizer 344 while maintaining its state; however, among the other light, only polarization light having a transmission plane perpendicular to the plane of the figure passes through the color polarizer 344. The light described above passes through the liquid crystal layer 180 while maintaining the state thereof and enters the polarizer 124. In the step described above, since the polarizer 124 only transmit a polarization component having a transmission plane in parallel with the plane of the figure, light in a region other than the red color region is all absorbed in the polarizer 124, and the light in the red color region is only emitted from the polarizer 124 as linearly-polarized light 309 having a transmission plane in parallel with the plane of the figure. Accordingly, the pixel P' exhibits a red viewing mode.

Furthermore, in the no-display portion Q, after part of light 303 emitted from the backlight 800 passes through the reflective layer 600, the light 303 is turned into light in the red color region when passing through the light modulator 220 and then enters the color polarizer 344. In the step described above, the color polarizer 344 does not substantially absorb the light in the red color region but transmits the light therethrough. Subsequently, after the light in the red color region passes through the liquid crystal layer 180, linearly-polarized light 307 in the red color region having a transmission plane in parallel with the plane of the figure is formed when the light passes through the polarizer 124 and is then emitted. Accordingly, the non-display portion Q exhibits a red viewing mode.

As described above, according to this embodiment, in both the reflective display using external light and the transmissive display using the backlight, the pixel P exhibits a bright color (white color), and both the pixel P' and the non-display portion Q exhibit a red color. Accordingly, the display mode of this embodiment is a reverse display (negative pattern) of red color.

In this embodiment, the case in which the color polarizer 344 transmits red light, and the light modulator 220 forms red light is described; however, this embodiment can be applied to the case in which light in a specific region formed by the color polarizer 344 and light modulated by the light modulator 220 are light in various wavelength regions other than the red light region.

In this embodiment, the color polarizer 344 is disposed at the rear side of the liquid crystal layer 180; however, the color polarizer 344 at the rear side of the liquid crystal layer 180 may be replaced by a general polarizer, and in addition, the polarizer 124 disposed at the front side of the liquid crystal layer 180 may be replaced by a color polarizer. Furthermore, both polarizers disposed at the front side and the rear side of the liquid crystal layer 180 may be color polarizers. In these cases described above, a display mode substantially equivalent to that described above can be realized.

### [Third Embodiment]

Next, referring to Fig. 6, a liquid crystal display device according to a third embodiment of the present invention will be described. In this embodiment, descriptions of the same elements as those in the first and the second embodiments are omitted. In this embodiment, the liquid crystal display device consists of the same liquid crystal panel as the liquid crystal panel 300 in the second embodiment described above; and a reflective layer 600 and a backlight 800, which are the same as those in the first and the second embodiments.

As shown in Fig. 6, a light modulator 240 of this embodiment comprises a first filter portion 240a corresponding to the first area and a second filter portion 240b corresponding to the second area, and the first filter portion 240a and the second filter portion 240b have light modulation functions different from each other, for example, hues different from each other. The light modulation functions of the individual filter portions are not specifically limited as long as the filter portions are formed so as to realize their own viewing modes different from each other. Hereinafter, as a particular example, the case will be described by way of example in which the first filter portion 240a is a yellow filter (that is, a filter substantially having light transmission properties in both the red color region and the green color region) and the second filter portion 240b is a red color filter.

In the pixel P to which a voltage is not applied, when external light passes through the liquid crystal panel 300, the external light is turned into linearly-polarized light having a transmission plane perpendicular to the plane of the figure, and subsequently, this linearly-polarized light is turned into yellow light having wavelength components in the red color region and the green color region when passing through the first filter portion 240a and is then reflected on the reflective layer 600. Next, the light again passes through the first filter portion 240a and the liquid crystal panel 300 in this order and is then emitted as yellow light. Accordingly, the pixel P exhibits a yellow viewing mode.

In addition, in the pixel P' to which a voltage is applied, when external light passes through the liquid crystal panel 300, the external light is turned into linearly-polarized light having a transmission plane in parallel with the plane of the figure by a polarizer 124. This linearly-polarized light having a transmission plane in parallel with the plane of the figure maintains its polarized state after passing through the liquid crystal layer 180. Subsequently, among polarization components having a transmission plane in parallel with the plane of the figure, light in regions other than red color region is absorbed, and hence, only the light in the red color region passes through the first filter 240a. In the step described above, since the light in the red color region can pass through the first filter portion 240a, the red light is reflected on the reflective layer 600. After this red light again passes through the color polarizer 344 and the liquid crystal layer 180 in this order, the red light is emitted from the polarizer 124. Accordingly, the pixel P' exhibits a red viewing mode.

In addition, the non-display portion Q always exhibits a red viewing mode due to the filter characteristics of the second filter portion 240b of the light modulator 240 as is the case in the second embodiment.

Furthermore, concerning the viewing mode obtained by luminous light emitted from the backlight 800, as is the cases described above, the pixel P, the pixel P', and the non-display portion Q exhibit a yellow, a red, and a red viewing mode, respectively.

As described above, in this embodiment, the non-display portion always exhibits a red viewing mode, and depending on an application state of an electric field, a red viewing mode approximately equivalent to that of the non-display portion Q and a yellow viewing mode can be optionally shown in the pixels P and P'. Accordingly, a two-color display mode, for example, a red and a yellow display mode described in the above particular example, can be realized in this embodiment.

In this embodiment, the viewing mode of the pixel P' is determined by the light modulation property of the first filter portion 240a and the light absorption property of the color polarizer 344. For example, concerning the hue, the viewing mode of the pixel P' is determined in accordance with a modulated spectral distribution obtained by the first filter portion 240a and a polarized spectral distribution of a polarization component having a transmission plane in parallel with the absorption axis of the color polarizer 344. In the case according to this embodiment, in more particular, the viewing mode of the pixel P' is determined by subtract mixing of the modulated spectral distribution obtained by the first filter portion 240a and the polarized spectral distribution of the polarization component formed by the color polarizer 344, and the viewing mode of the pixel P is determined only by the modulated spectral distribution obtained by the first filter portion 240a.

Accordingly, in this embodiment, in order to make the viewing mode of the pixel P' approximately equivalent to the viewing mode of the non-display portion Q, it is necessary that the product of spectral distribution, which is formed by performing a subtract process (or a multiply process) using the modulated spectral distribution obtained by the first filter portion 240a and the polarized spectral distribution of the polarization component obtained by the color polarizer 344, be approximately equivalent to the modulated spectral distribution obtained by the second filter portion 240b. For example, as an example other than the particular example described above, in the case in which the color polarizer 344 is equivalent to that in the particular example, when the first filter portion 240a has the transmission property in the red color region and the blue color region (that is, a magenta filter), and the second filter portion 240b is a red filter, a magenta display pattern can be obtained on a red background. In addition, when the second filter portion 240b is a blue filter, a magenta display pattern is obtained on a blue background. Furthermore, in the case in which the color polarizer 344 has a property which transmits only light in the green color region among polarization components each having a transmission plane in parallel with the absorption axis of the polarizer, when the first filter portion 240a has the transmission property in the red color region and the blue color region as described above, the pixel P exhibits a yellow viewing mode, and the pixel P' exhibits a green viewing mode. In the case described above, in order to form a green background, it is necessary that the second filter portion 240b also have an optical property that transmits only light in the green color region therethrough.

As described above, a two-color display can be performed according to this embodiment, and hence, a colorful display mode can be realized. In the case described above, in addition to a seven-segment pixel group described in the above embodiments, optional pattern displays, for example, image figures such as a specific icon or a character, or another figure, can be displayed in a color viewing mode or not. In addition, by forming a figure using a plurality of pixels, animation display (movie display) of an optional pattern can be realized in a color viewing mode.

In the embodiment described above, the case is described by way of example in which only the first area (first filter portion) and the second area (second filter portion) are provided as light modulation means; however, by providing at least two first areas, at least three different hues can be realized. In the case described above, when every modulated spectral distribution formed by the plurality of first areas includes light wavelength regions of polarized spectral distributions obtained by the color polarizer, viewing modes obtained by the polarized spectral distributions can be optionally realized in every pixel.

According to this embodiment, the liquid crystal display device described above has functions equivalent to those of a liquid crystal display device provided with a reflective polarizer (which transmits a polarization component having a transmission plane in a predetermined direction and reflects a polarization component having a transmission plane in another direction) at the rear side thereof and provided with optional light modulation means at the rear side of the reflective polarizer, and in addition, the liquid crystal display device according to this embodiment can be manufactured at low cost without using the reflective polarizer.

### [Fourth Embodiment]

Next, referring to Figs. 7 and 8, a liquid crystal display device of a fourth embodiment of the present invention will be described. Fig. 7 is a view showing a part of a display area according to the fourth embodiment. Fig. 8 is a partly vertical cross-sectional view taken along the line B-B in Fig. 7. As shown in Fig. 7, a liquid crystal display device 70 has a light modulator 72 provided on the top of the display area. This light modulator 72 has a predetermined color tone on the surface (outside surface) thereof, and this color tone can be obtained by, for example, forming a print layer, composed of a paint or the like appropriately mixed with a color agent such as a pigment or a dye, on a surface of a plate-shaped substrate composed of an optional material. This light modulator 72 is provided with a plurality of display windows 72a therein. In the example shown in the figure, the display windows 72a form a shape equivalent to that of a seven-segment pixel group.

As shown in Fig. 8, one liquid crystal panel 700 is provided at the rear side of each display window 72a, and the display area of each liquid crystal panel 700 is formed so as to be viewed through each display window 72a. These liquid crystal panels 700 are each formed of a pair of substrates 720 and 740, composed of a glass or the like, bonded together by a sealing material, and liquid crystal layer 780 composed of liquid crystal enclosed between the two substrates. Transparent electrodes 722 and 724 opposing each other are formed on the inside surfaces of the substrates 720 and 740, respectively. In addition, polarizers 724 and 744 are adhered to the outside surfaces of the substrates 720 and 740, respectively.

As in the cases of the embodiments described above, this liquid crystal panel 700 is a so-called normally white liquid crystal panel which is placed in a light blocking state when a voltage is applied between the transparent electrodes 722 and 724 constituting the display area, and which is placed in a light transmission state when a voltage is not applied. A general liquid crystal panel (such as a dot matrix type panel) having a plurality of pixels may by used as the liquid crystal panel 700 of this embodiment; however, since it is satisfactory when one display mode is performed on the entire panel surface, this liquid crystal panel 700 may have a single pixel formed of a pair of transparent electrodes provided on the internal surfaces of the two substrates so as to cover the display area.

A reflective layer 750 is provided at the rear side of the liquid crystal panel 700 described above, and in addition, a backlight 800 formed of an organic EL panel or the like equivalent to that described in the above embodiments is provided at the rear side of the reflective layer. Since the structure of the backlight 800 is equivalent to that described in the above embodiments, the description thereof is omitted.

In this embodiment, the reflective layer 750 may be a transflective layer equivalent to that described in the above embodiments or may be formed of a color reflective layer provided with an optional color tone. As the color reflective layer, an optional structure may be used which is formed of a color agent, such as a dye or a pigment, appropriately compounded with a material forming the reflective layer, or which is formed of a reflective material provided with a color filter layer on the surface thereof.

For example, when the color tone of the light modulator 72 is black, the reflective layer 750 is a transflective reflective layer similar to that described in the above embodiments. When the structure is formed as described above, as is the case described in the above embodiments, the display area of the liquid crystal panel is bright (white) when an electric field is not applied and is dark (black) when an electric field is applied. Accordingly, as shown in Fig. 7, when (four) liquid crystal panels 700 forming a display pattern (numeral "4" in the figure) are placed in a non-application state of an electric field, and (three) liquid crystal panels 700 which do not form the display pattern are placed in an application state of an electric field, reverse display (display of negative pattern) can be performed by using the surface of the light modulator 72 and the liquid crystal panels 700 in an application state of an electric field as a background.

In this embodiment, as in the second embodiment, a color polarizer may be used so as to obtain a color tone, which is approximately equivalent to the color tone of the surface of the light modulator 72, in the display areas of the liquid crystal panels 700 in an application state of an electric field. In addition, by forming the color layer described above and another light modulator on each liquid crystal panel 700, a two-color display can also be realized as in the case of the third embodiment.

Furthermore, although one display area is formed by one liquid crystal panel 700 in this embodiment, at least two display areas may be formed by one (common) liquid crystal panel. For example, in the example shown in the figure, it is possible that one (common) liquid crystal panel is provided at the rear sides of at least two display windows, and that at least two pixels corresponding to individual display windows 72a are formed in the liquid crystal panel. In addition, on the other hand, it may also be possible that a liquid crystal panel having at least two pixels, which are independently controllable, is provided at the rear side of one display window 72a so as to optionally create displays in a plurality of areas in the display window 72a.

When a relatively large display device is formed, this embodiment can realize one display mode using a plurality of simple liquid crystal panels. Accordingly, the liquid crystal display device according to this embodiment can be effectively used in place of an electronic display board, an outdoor display, an advertising tower, a scoreboard, an electric bulletin board, or the like. In the case described above, since the pixel unit of this liquid crystal panel is large, and in addition, the number of the pixels is small, the display device can be manufactured at a low cost.

### [Other Structures]

Constituent elements which can be commonly used in the embodiments described above and modified examples will be finally described.

First, a schematic structure of panel driving means necessary in the liquid crystal display device of each of the above embodiments will be described with reference to Fig. 10. As shown in Fig. 10, the liquid crystal display device 10 used in the above embodiments comprises a liquid crystal driving circuit 1010 for performing reverse display as described above, a control circuit 1020 for controlling this liquid crystal driving circuit 1010, and an electrical power circuit 1030 for supplying an electrical power to the liquid crystal driving circuit 1010. In addition, although not shown in the figure, a circuit unit for supplying an electric power to the backlight described above and for performing control thereof is provided inside or outside the liquid crystal display device 10.

The liquid crystal driving circuit 1010 is provided with a driving circuit unit 1011 for supplying a driving signal Vc to a common electrode (one of the pair of transparent electrodes opposing each other, described in the above embodiments) of a liquid crystal panel, for example, the liquid crystal panel 100 shown in the figure, and a driving circuit unit 1012 for supplying a driving signal Vs to a segment electrode (the other electrode between the two types of transparent electrodes) of the liquid crystal panel 100.

The control circuit 1020 receives display data D and control data C from the outside, supplies a control signal S1 to the liquid crystal driving circuit 1010, and when necessary, supplies a control signal S2 to the electrical power circuit 1030 described below. The control signal S1 controls the liquid crystal driving circuit 1010 so as to form the driving signals Vc and Vs described above.

The electric power circuit 1030 supplies a plurality of electrical potentials Ve necessary for forming the driving signals Vc and Vs to the liquid crystal driving circuit 1010 from a predetermined electric power source. The liquid crystal driving circuit 1010 changes these electric potentials Ve into the driving signals Vc and Vs in accordance with the control signals S1.

In the embodiment described above, a voltage is not applied to a pixel to which a threshold voltage or more is applied when a conventional normally white liquid crystal panel is driven for performing general display (display of a positive pattern), or a voltage less than the threshold voltage is only applied to the pixel. In addition, by changing a conventional signal mode of, for example, the control signals S1 of the control circuit 1020 so as to apply a threshold voltage or more to a pixel to which a voltage is not applied or a voltage less than the threshold voltage is applied for forming a general display, a reverse display (display of negative pattern) can be very easily created on the liquid crystal panel 100 while the liquid crystal driving circuit 1010 maintains the conventional structure.

In addition, without changing an inside structure of the liquid crystal display device shown in Fig. 10 from the conventional structure at all, reverse driving may be performed by making data, such as control data C shown in the figure, which is supplied from the outside different from that used for general driving.

Next, modified examples of the liquid crystal display device and the electronic apparatus of the above embodiments will be described. In the above embodiments, a transflective liquid crystal display device is formed; however, the same display mode as described above can be obtained by a simple reflective liquid crystal display device or a transmissive liquid crystal display device, and the same advantages as described above can also be obtained. Furthermore, the present invention can be applied to a known front light liquid crystal display device. In the above embodiments, although a transflective layer is used in order to form a transflective liquid crystal display device, a reflective layer having a light transmission portion such as a slit in each pixel may also be used.

In addition, in the above embodiments, polarization means is used which transmits a predetermined polarization component and absorbs another polarization component; however, there may also be a method differing from the above in which a so-called reflective polarizer which transmits a predetermined polarization component and reflects another polarization component is used. In the case described above, a reflective color polarizer corresponding to the color polarizer described above may also be formed.

### [Reference Numerals]

10, 30, 40, 70 liquid crystal display device
100, 300, 700 liquid crystal panel
120, 140, 720, 740, 840 substrate
122, 142, 722, 742 transparent electrode
124, 144, 724, 744 polarizer
160 sealing material
180, 780 liquid crystal layer
72, 200, 220, 240 light modulator
200a, 220a window portion
72a display window
240a first filter portion
240b second filter portion
344 color polarizer
800 backlight
810 light-emitting layer
812 electron transport layer
814 hole transport layer
822, 842 transparent electrode
840 sealing glass
880 silicone oil
P, P' pixel
Q non-display portion
R display area

## Claims

1. A liquid crystal display device comprising a liquid crystal panel having a pixel; and light modulation means comprising a first area provided with a predetermined light modulation property at a position approximately corresponding to the pixel and a second area provided with a light modulation property at a position other than that of the first area, wherein the light modulation property of the second area is different from that of the first area.

2. A liquid crystal display device according to Claim 1, wherein the second area is provided at a position corresponding to that at which the pixel is not provided.

3. A liquid crystal display device according to one of Claims 1 and 2, wherein the liquid crystal panel is formed so that one of a first viewing mode and a second viewing mode, which are different from each other, is selectively displayed in the pixel in accordance with an application state of a voltage by using light which is modulated or not modulated in the first area.

4. A liquid crystal display device according to Claim 3, wherein the first viewing mode is visually nearer to a third viewing mode which is obtained by using light modulated in the second area, and the second viewing mode is visually further from the third viewing mode.

5. A liquid crystal display device according to Claim 4, wherein the liquid crystal panel is formed so that the second viewing mode is displayed in the pixel when a voltage is not applied.

6. A liquid crystal display device according to one of Claims 4 and 5, wherein the second viewing mode has high luminosity compared to that of the first viewing mode.

7. A liquid crystal display device according to any one of Claims 4 to 6, wherein the second viewing mode includes a plurality of viewing modes different from each other formed in a plurality of said pixels.

8. A liquid crystal display device according to any one of Claims 1 to 7, wherein the liquid crystal panel comprises a liquid crystal cell which exhibits a retardation property depending on an applied electric field; first polarization means provided at the front side of the liquid crystal cell; and second polarization means provided at the rear side of the liquid crystal cell.

9. A liquid crystal display device according to Claim 8, wherein the light modulation means is disposed between the liquid crystal cell and the second polarization means or is disposed at the rear side of the second polarization means and adjacent thereto.

10. A liquid crystal display device according to Claim 8, wherein the light modulation means is disposed at the front side of the first polarization means.

11. A liquid crystal display device according to any one of Claims 8 to 10, wherein at least one of the first polarization means and the second polarization means selectively modulates a polarization component having a transmission plane in a predetermined direction to form a predetermined polarized spectral distribution of the polarization component so that a color tone obtained by the polarized spectral distribution and a modulated spectral distribution formed by light modulation in the first area is approximately equivalent to a color tone obtained by light modulated in the second area.

12. A liquid crystal display device according to any one of Claims 3 to 7, wherein the liquid crystal panel comprises a liquid crystal cell, first polarization means provided at the front side of the liquid crystal cell, and second polarization means provided at the rear side of the liquid crystal cell, and at least one of the first polarization means and the second polarization means selectively modulates a polarization component having a transmission plane in a predetermined direction to form a predetermined polarized spectral distribution of the polarization component so as to display the first viewing mode by the polarized spectral distribution and a modulated spectral distribution formed by light modulation in the first area.

13. A liquid crystal display device according to Claim 12, wherein the second viewing mode is displayed in the pixel by light modulation in the first area without being modulated by at least one of the first polarization means and the second polarization means which are able to form the polarized spectral distribution.

14. A liquid crystal display device according to one of Claims 1 to 13, wherein a plurality of said liquid crystal panels each having the pixel is provided, and the light modulation means is provided at the front side of the plurality of said liquid crystal panels.

15. An electronic apparatus comprising a liquid crystal display device according to any one of Claims 1 to 14.

16. An electronic apparatus according to Claim 15, wherein a liquid crystal display surface of the liquid crystal display device is used as a time information display portion.
